(19) **Europäisches Patentamt European Patent Office Office européen des brevets**

(11) **EP 4 718 371 A1**

(12) **EUROPEAN PATENT APPLICATION**

(43) Date of publication:
01.04.2026 Bulletin 2026/14

(51) International Patent Classification (IPC):
*G06T 5/60* (2024.01)   *G06T 5/70* (2024.01)

(21) Application number: 25186760.2

(22) Date of filing: 01.07.2025

(52) Cooperative Patent Classification (CPC):
**G06T 5/70; G06T 5/60; H04N 19/86;**
G06T 2207/20081; G06T 2207/20084; H04N 19/117

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.09.2024 US 202463700489 P**
**18.02.2025 US 202519056217**

(71) Applicants:
• **Disney Enterprises, Inc.**
**Burbank, CA 91521 (US)**
• **ETH Zürich (Eidgenössische Technische Hochschule Zürich)**
**8092 Zürich (CH)**

(72) Inventors:
• **RELIC, Lucas**
**Zürich (CH)**
• **DE ALBUQUERQUE AZEVEDO, Roberto Gerson**
**Zürich (CH)**
• **ZHANG, Yang**
**Dübendorf (CH)**
• **SCHROERS, Christopher Richard**
**Uster (CH)**
• **XUE, Yuanyi**
**Alameda (US)**
• **LABROZZI, Scott**
**Cary (US)**

(74) Representative: **Müller-Boré & Partner Patentanwälte PartG mbB Friedenheimer Brücke 21 80639 München (DE)**

(54) **BRIDGING THE GAP BETWEEN DIFFUSION MODELS AND UNIFORM QUANTIZATION FOR IMAGE COMPRESSION**

(57) In some embodiments, a method receives an image and encodes the image into a latent representation in a latent space. A quantization process is performed on the latent representation to generate a quantized latent representation. The quantization process is based on a uniform noise. The method transmits the quantized latent representation to a receiver. An inverse quantization process is performed to generate a reconstructed latent representation via a diffusion model that performs a denoising process for a number of iterations based on a time step t to remove noise from the reconstructed latent representation. The diffusion model is trained to perform denoising using the uniform noise.

**FIG. 1**

**Description**

## CROSS REFERENCE TO RELATED APPLICATIONS

Pursuant to 35 U.S.C. §119(e), this application is entitled to and claims the benefit of the filing date of U.S. Provisional App. No. 63/700,489 filed September 27, 2024, entitled "LINKING OF DIFFUSION MODELS AND UNIFORM QUANTIZATION FOR IMAGE COMPRESSION", the content of which is incorporated herein by reference in its entirety for all purposes.

## BACKGROUND

Multimedia content is delivered through networks globally, and makes up a large portion of the traffic. The development of efficient compression algorithms is important to efficiently deliver the multimedia content throughout the networks.

Traditional encoder-decoders (CODECS), which use handcrafted transformations by users, may be outperformed by data-driven neural image compression (NIC) methods that optimize for both rate and distortion. Nevertheless, neural image compression methods may still produce blurry and unrealistic images, such as in low bitrate settings. This is because the methods may be optimized for rate distortion, where distortion is measured with pixel-wise metrics like mean squared error. The optimizing for low distortion, such as pixel-wise error, may result in unrealistic images. This may be because emphasizing pixel-wise accuracy or similarity to the original image may lead to overly smoothed or blurry outputs.

## BRIEF DESCRIPTION OF THE DRAWINGS

The included drawings are for illustrative purposes and serve only to provide examples of possible structures and operations for the disclosed inventive systems, apparatus, methods, and computer program products. These drawings in no way limit any changes in form and detail that may be made by one skilled in the art without departing from the spirit and scope of the disclosed implementations.

FIG. 1 depicts a simplified system for performing compression according to some embodiments.

FIG. 2 depicts a simplified flowchart of a method for determining a quantization schedule according to some embodiments.

FIG. 3 depicts a simplified flowchart of a method for performing a diffusion process according to some embodiments.

FIG. 4 depicts a simplified flowchart of a method for performing the training process according to some embodiments.

FIG. 5 illustrates one example of a computing device according to some embodiments.

## DETAILED DESCRIPTION

Described herein are techniques for a content processing system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

### System Overview

Generative neural image compression supports data compression with extremely low bitrate, allowing receivers (e.g., client devices) to synthesize details and consistently produce highly realistic images. By leveraging the similarities between quantization error and additive noise, diffusion-based generative image compression codecs use a latent diffusion model to denoise the artifacts introduced by quantization. An image compression pipeline may use a diffusion model that may synthesize lost details from the compression process. For example, the diffusion model may be used to correct quantization error that may result when using a quantization process. The error introduced during quantization may be similar to adding uniform noise. In fact, adding uniform noise is often used as a differentiable surrogate to the quantization operation during the training of neural codecs. As diffusion models are inherently denoising models, the diffusion models can then be used to counteract the quantization error introduced during encoding. Leveraging the similarity between quantization error and noise, the diffusion model may perform a subset of denoising steps corresponding to the noise level (e.g., quantization error) of a quantized latent representation. The resulting output of the diffusion model may correct the quantization error from the quantization process. This may improve the resulting decoded image with more realistic images, particularly at low bitrates, but the improvement may occur at all bitrates.

There may be three gaps in previous approaches following this paradigm (namely, a noise type gap, a discretization gap, and a noise level gap) that result in the quantized data falling out of the data distribution known by the diffusion model. When this happens, the diffusion model may not optimally denoise the artifacts introduced by quantization. However, the present system uses a quantization-based forward diffusion process that overcomes all three aforementioned gaps.

The system addresses three gaps of the noise type gap, the noise level gap, and the discretization gap. The noise type gap represents the difference in distribution between quantization error (e.g., uniform noise) and Gaussian diffusion models. The noise level gap refers to the possible mismatch in the expected signal-to-noise ratio of the partially noisy data versus the actual ratio. The discretization gap arises from passing discrete data to a continuous diffusion model. Leaving these gaps unsolved may cause the data to fall out of the distribution of the diffusion model, negatively impacting the final reconstruction quality. The system includes a quantization-based forward diffusion process, to close the discretization and noise level gaps, and uses a uniform noise diffusion model to close the noise type gap. The system produces consistently realistic and detailed reconstructions, even at very low bitrates.

In some embodiments, the system uses a quantization-based forward diffusion process that places the quantized data along the diffusion trajectory. The forward process uses universal quantization to close the discretization gap and introduces a quantization schedule that dictates the signal-to-noise ratio of the quantized data. Finally, the system uses a diffusion model trained with uniform noise, thus matching the distribution of the quantization error to resolve the noise type gap. Also, in some embodiments, the uniform noise diffusion model may be efficiently obtained by fine-tuning existing Gaussian diffusion models. The system provides an image codec that produces more realistic and detailed reconstructions than previous methods while being able to operate at a wider range of target bitrates.

The system includes a pipeline that combines non-integer universal quantization and a fine-tuned uniform noise diffusion model. The system selects a quantization bin width to ensure the signal-to-noise ratio (SNR) of the quantized variable matches the expected the signal-to-noise ratio at every timestep, whereas employing universal quantization eliminates the discretization gap and mitigates a discretization gap between the difference between the expected Gaussian noise and the actual uniform noise in the quantization error.

Given the noise-like properties of quantization, a system takes advantage of the denoising capabilities of diffusion models and develops a codec that uses these models to explicitly remove the errors introduced during quantization. The system uses a link between quantization error and the diffusion process. Given the iterative nature of diffusion models, instead of sampling a new image from the generative model, the system can take an existing image and obtain a partially noised sample at some arbitrary iteration, which can be reconstructed to the original image by performing a subset of diffusion steps. The system uses universal quantization with a selected "quantization schedule" such that the quantized variable lies along the diffusion trajectory, thus allowing for a detailed and realistic reconstruction via the denoising diffusion process.

The system can resolve the distribution mismatch between Gaussian and uniform noise. Rather than attempting to warp uniform noise to be normally distributed, the system can instead substitute the Gaussian diffusion model for one that operates on uniform noise to achieve the same effect. As the uniform distribution satisfies this requirement, a diffusion model that denoises uniform noise can be used.

System

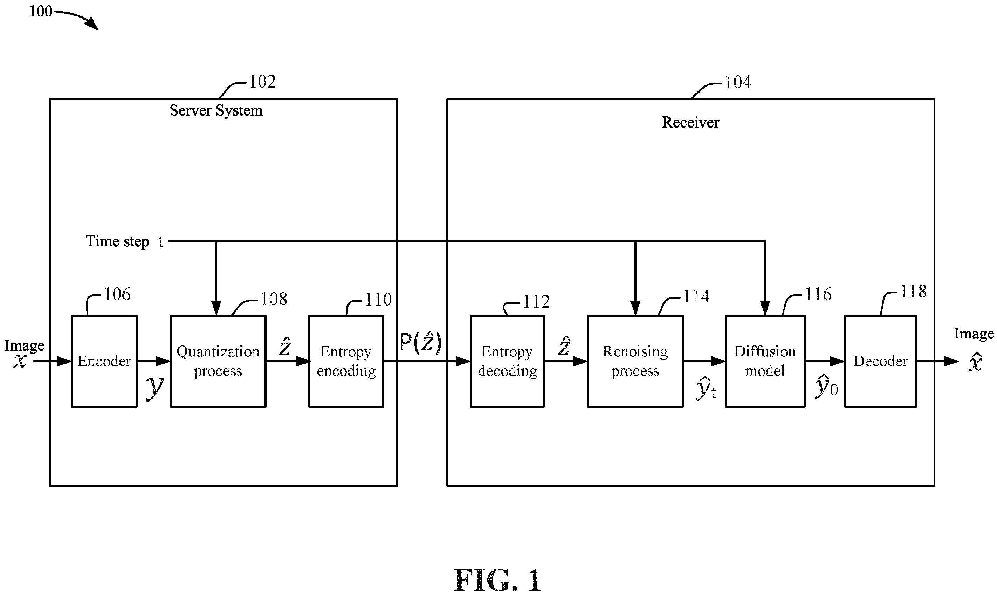

FIG. 1 depicts a simplified system 100 for performing compression according to some embodiments. System 100 includes a server system 102 and a receiver 104. Server system 102 may encode the content and receiver 104 may decode the content. In some embodiments, server system 102 may transmit the encoded content across a network to receiver 104. However, the encoding and decoding may be performed on a single system. In some embodiments, server system 102 may be encoding a video, which is transmitted across a network to a client device as receiver 104. The client device may decode the video and display the video using a media player on an interface. The client device in this case may be a smartphone, living room device, television, personal computer, laptop, tablet device, etc. Other system configurations may also be appreciated.

Diffusion models may be a class of generative models that define an iterative process that gradually destroys an input signal by adding noise as a time step t increases (e.g., a forward diffusion process), and then tries to model the reverse process by denoising a noisy image (e.g., a reverse diffusion process). Empirically, the forward process is performed by adding noise, such as uniform noise, to the signal. Thus, the reverse process is a denoising process to remove noise from the input. The diffusion model approximates the reverse process by estimating the noise level of the image and using it to predict the previous step of the forward process. This may remove a certain amount of noise from the image. This may be performed for a number of time steps. To fully denoise the image, the diffusion model may iteratively perform a full set of time steps in the reverse process.

Latent diffusion models may provide improved memory and computational efficiency by moving the diffusion process to a spatially lower dimensional latent space compared to the image space (e.g., pixel space). The latent space may provide similar performance to the corresponding image space diffusion models while requiring less parameters and memory. Here, the latent diffusion models may be trained in a latent space in which an encoder may encode an image to a latent representation in the latent space. Then, the latent representation is processed by the latent diffusion model to denoise the latent representation by time steps t. The denoised latent representation may be decoded back to a decoded image in the image space.

The system solves the noise type gap. Quantization error in many domains (such as the latent domain) can be approximated by uniform noise. However, some diffusion models assume a Gaussian noise structure as it aligns with natural data distribution assumptions and facilitates tractable modeling. This results in the noise type gap - a discrepancy between the quantization error (well approximated by uniform noise) and the Gaussian noise used in the diffusion process. This misalignment means that when uniform quantization noise interacts with a Gaussian denoising diffusion model, the model fails to correctly predict the actual noise characteristics to denoise, resulting in generative artifacts. Specifically, the mismatch can lead to visually disruptive effects such as unnatural color shifts, texture inconsistencies, and artificial patterns that degrade the realism and fidelity of the generated image.

Also, the system solves the discretization gap. The neural decoders, despite being continuous models, operate on discrete representations extracted from the transmitted bitstream; most methods build robust decoders that minimize the resulting negative effects. However, building a similarly robust diffusion model in this context may not be possible since they model transitions between continuous states and are inherently unable to handle discrete inputs. This results in a discretization gap - the incompatibility between using discrete input data with continuous diffusion models. Under the discretization gap, small variations in the input data are eliminated, which leads to flat textures and loss of detail, and using a large quantization bin size causes blocking artifacts and color shifts due to the low resolution of the color palette.

Finally, the system solves the noise level gap. Diffusion image generation assumes a fixed progression through a variance schedule, which dictates the noise level at each time step t. It is therefore critical to ensure a match in noise level between the forward diffusion process and backward diffusion process (e.g., the noise at every corresponding time step t should be the same in the forward process and the reverse process; failure to do so violates the theoretical basis of diffusion models). However, when using a different forward process (e.g., when quantization is substituted for the forward process), it is possible for the noise level in the forward and reverse processes to not align. This is the noise level gap - a difference in the actual noise level of the diffusion variable versus what is expected at any timestep. Intuitively, the diffusion model either over- or under-estimates the noise in the variable in the time step throughout the diffusion process, which results in either noisy or overly smoothed image re-constructions.

The following pipeline addresses the three gaps described above of the noise type gap, the noise level gap, and the discretization gap. In the pipeline, server system 102 may receive an image x. For example, image x may be an image from a video that is being encoded. The following process may be performed for each image of the video. Encoder 106 may encode the image into a latent representation y in a latent space. The latent space may be a lower dimensional space compared to the image space. That is, the latent space may represent a compressed version of the input capturing the important features. In some embodiments, encoder 106 may be a variational autoencoder (VAE), which may be a neural network or machine learning model, that is trained to represent the image in the latent space. Encoder 106 may be considered part of a diffusion model 116, or may be separate. In some embodiments, the latent representation y may be a latent vector that captures key features of the input image in the latent space. The latent representation y may be mapped from the input image to a distribution in the latent space that may be parameterized by a mean and a variance. Although a variational autoencoder is described, other encoders that can map the input image into the latent space may be used.

Quantization process 108 may quantize the latent representation y using a quantization schedule based on a time step t into a quantized latent representation $\hat{z}$. The quantization process reduces the precision of an image by representing it using a finite number of discrete values. Quantization process 108 may convert a continuous-valued signal into a digital signal with a limited range of values. This is done by mapping the continuous signal to a set of discrete values, called quantization levels or bins. The quantization process may be an affine transformation T on the latent representation y, before applying integer quantization. The affine transformation may be a linear mapping used to transform floating-point values into a fixed-point representation, such as integers. The channels may be channels of a latent encoding or an image, such as colors, intensity, etc.

The quantized latent representation $\hat{z}$ may be entropy encoded by entropy encoding 110. An entropy model may be used to encode the quantized latent representation to a bitstream that includes the quantized latent representation P(2). Different entropy models may be used to entropy encode the quantized latent representation to a bitstream. Entropy coding may reduce the average number of bits needed to represent the quantized latent representation using entropy encoding methods, including Huffman coding and Arithmetic coding. The entropy encoding may reduce the average length of the quantized latent representation by assigning shorter codes to more frequent symbols and longer codes to less frequent ones.

Server system 102 may transmit the bitstream to receiver 104. An entropy decoding 112 may entropy decode the bitstream to reconstruct the quantized latent representation $\hat{z}$. Entropy decoding is the reverse process of the entropy encoding to reconstruct the bitstream to the quantized latent representation $\hat{z}$.

A renoising process 114 may perform part of the quantization using the quantization schedule based on time step t to generate a reconstructed latent representation $\hat{y}_t$. The renoising process takes as input a discrete representation $\hat{z}$ and outputs the representation in the continuous domain. The reconstructed latent representation $\hat{y}_t$ may have a quantization error due to information loss. This quantization error may be similar to noise. For example, quantization error may introduce random variations into the latent representation during the process of converting continuous (high-precision) data, such as floating-point numbers, into discrete (low-precision) values, such as integers. Accordingly, a quantization process has been separated into two stages, where one half is performed on server system 102 (the sender) and the other stage is performed at receiver 104.

The reconstructed latent representation is input into a diffusion model 116 to perform the inverse quantization process. Diffusion model 116 may denoise the reconstructed latent representation to remove noise, which may remove the quantization error that was introduced, to output a denoised latent representation $\hat{y}_0$. That is, the quantization error may be similar to adding noise to an image, and diffusion model 116 may be used to denoise the reconstructed latent representation. This process will be described in more detail below.

A decoder 118 may decode the denoised latent representation $\hat{y}_0$ into a decoded image $\hat{x}$. In some embodiments, decoder 118 may be a variational auto decoder, but other decoders may be used. Decoder 118 may reconstruct the denoised latent representation from the latent space to the decoded image $\hat{x}$ in the image space. The decoded image may be improved in that at least some of the quantization error that was introduced may have been removed by diffusion model 116. The removal of this error may result in a more realistic reconstructed image.

Diffusion Process

Diffusion models define a process that models the transition between random noise and structured data. When the forward process (e.g., data to noise) and reverse process (e.g., noise to data) are divided into small steps, the transition between each step is the addition or removal of a Gaussian noise sample. The full diffusion process is thus a traversal between a series of timesteps $t \in [N, 0]$. While this process is iterative, the partially noisy diffusion variable $y_t$ at any given timestep t can be expressed in terms of the original data $y_0$ and a noise sample $\varepsilon$:

$$y_t = \sqrt{\bar{\alpha}_t}y_0 + \sqrt{1 - \alpha_t}\epsilon, \, \epsilon \sim \mathrm{N}(0, \mathrm{I}), \quad (1)$$

where $\alpha_t$ (known as the "variance schedule") defines the signal to noise ratio of $y_t$ at every timestep t and increases as t $\rightarrow$ 0. The noise sample $\varepsilon$ is a forward pass of the diffusion model. The variance schedule controls the trade-off between the signal and noise components of the diffusion variable $y_t$ at each timestep t. The reverse diffusion process is intractable and thus parameterized by the diffusion model, which learns to iteratively denoise $y_t$ by stepping through t = {N, ..., 1, 0}. The partially denoised data $y_{t-1}$ can be computed from the noisy data $y_t$ with:

$$y_{t-1} = \sqrt{\alpha_{t-1}}\widetilde{y_0} + \sqrt{1 - \alpha_{t-1}}\epsilon_\theta(y_t, t) \quad (2)$$

where $\varepsilon_\theta(y_t, t)$ is the output of the diffusion model, which takes $y_t$ and the current timestep t as input, and $\tilde{y}_0 = f(\varepsilon_\theta (y_t, t), t)$ is an estimation of the fully denoised data, which is computed from the output of the diffusion model and the current timestep. The fully denoised data is produced by consecutively performing equation (2) to produce slightly less noisy data until the fully denoised data is output.

To use diffusion models as an image compression codec, the forward noising process can be replaced with quantization (which is analogous to adding uniform noise to the original signal) and the diffusion model used to denoise the quantization error. As discussed above, three drawbacks of the noise type gap, the noise level gap, and the discretization gap may result.

System 100 provides an improved forward process. System 100 uses quantization for the forward process to replace the diffusion model forward process. In the forward process using quantization, a discrete variable can be encoded to a bitstream, while maintaining the noise characteristics of the original diffusion variance schedule. The standard forward process (a slight reorganization of Equation 1) is:

$$y_t = \sqrt{\alpha_t}y_0 + \epsilon, \, \epsilon \sim \mathrm{N}(0, (1 - \alpha_t)\mathrm{I}), \quad (3)$$

To address the discretization gap, quantization process 108 may use universal quantization as the forward process to add noise to obtain a discrete variable for entropy coding. Universal quantization may be hard quantization dithered by a uniform random variable. This has the unique property of being equal in distribution to simply adding another sample (from an identical random variable) to the original unquantized variable:

$$\hat{y} = \lfloor \mathbf{y} - \mathbf{u} \rceil_\Delta + \mathbf{u} = \mathbf{y} + \mathbf{u}', \quad \mathbf{u}, \mathbf{u}' \sim U\left[-\Delta/2, \Delta/2\right], \quad (4)$$

where

$$\lfloor \ \rceil_\Delta$$

denotes rounding to a bin of width $\Delta$. The bin of width $\Delta$ may be a quantization step size or interval that refers to the range of values that are mapped to a single quantized value. Hard quantization refers to the process of rounding a continuous-valued signal to the nearest quantization level. The term

$$\lfloor y - u \rceil$$

represents the hard quantization operation that is rounded to the bin of width $\Delta$, which is then dithered by the uniform random variable u to randomize the quantization error. The uniform random variable is a uniform noise sample u, u' that is uniformly distributed between $-\Delta/2$ and $\Delta/2$. The value of u, u' can take on any value within this range with equal probability. Quantization process 108 and renoising process 114 introduce error to the input signal y, but in a way that preserves the statistical properties of the signal degradation as expected by the diffusion process.

Combining equations (3) and (4), the forward noising process performed by quantization process 108 and renoising process 114 becomes:

$$\hat{y}_t = \lfloor \sqrt{\alpha_t} y - u \rceil_\Delta + u, \quad u \sim U[-\Delta/2, \Delta/2], \quad (5)$$

$$\hat{z} = \lfloor \sqrt{\alpha_t} - u \rceil_\Delta, \quad (6)$$

$$\hat{y}_t = \hat{z} + u, \quad (7)$$

Compared to hard quantization, which passes the discrete data directly to the decoder, the reconstructed latent representation $\hat{y}_t$ is once again a continuous variable; the addition of a uniform noise sample u in equation (7) to the quantized latent representation $\hat{z}$ moves the reconstructed latent representation $\hat{y}_t$ back into continuous space. For example, after rounding in quantization process 108 (equation (6)), renoising process 114 outputs reconstructed latent representation $\hat{y}_t$ in the continuous space (equation (7)). The equation (6) of the quantization is performed by quantization process 108 at server system 102 and equation (7) is performed by renoising process 114 at receiver 104.

To address the noise level gap, system 100 ensures the signal-to-noise ratio of the latent representation yt and the reconstructed latent representation $\hat{y}_t$ for all time steps t. The signal to noise ratio of the reconstructed latent representation $\hat{y}_t$ can be controlled by adjusting the quantization bin width and uniform noise support, defined in terms of $\Delta$. Thus, to close the noise level gap, system 100 matches the noise levels of the latent representation yt and the reconstructed latent representation $\hat{y}_t$:

$$\mathrm{SNR}(\hat{y}_t) = \mathrm{SNR}(y_t) \ \forall t \in \{T, ..., 0\}, \quad (8)$$

Quantization process 108 uses a quantization schedule that varies the quantization bin width as a function of timestep t. The uniform variable support is the interval or range of values within which the random variable u is uniformly distributed. This means that every value within this range has an equal probability of being selected. The added noise u is uniformly distributed between $-\Delta/2$ and $\Delta/2$. In some embodiments, quantization process 108 sets the bin of width $\Delta =$

$$\sqrt{12(1 - \overline{\alpha}_t)^2}$$ in equations 5 and 6. The bin of width $\Delta$ can be determined by substituting equations 1 and 5 into equation 7, and solving for the bin of width Δ. Following the quantization schedule and varying the bin size resolves the signal-to-noise ratio gap by maintaining a consistent signal-to-noise ratio between the diffusion variable of the reconstructed latent representation $\hat{y}_t$ and the quantized variable of the latent representation $y_t$.

The quantization-based forward process simultaneously eliminates both the discretization and noise level gaps, via universal quantization and the quantization schedule, respectively. An added benefit of the quantization schedule is that it also becomes a rate-distortion tradeoff parameter, as the quantization bin width directly impacts the final size of the compressed bitstream. Additionally, because diffusion models can denoise data at any arbitrary timestep, system 100 supports compression to multiple bitrates with a single model by accepting the time step t as an input at inference time to perform the compression.

In some embodiments, system 100 may train a uniform diffusion model by starting from a pretrained Gaussian diffusion model. In some embodiments, system 100 fine tunes a foundation diffusion model and exchanges the Gaussian noise for uniform noise. As diffusion models are sensitive to changes in the variance schedule, system 100 may leave it unchanged despite the change in distribution. To adapt a Gaussian diffusion model to uniform noise, this is done by drawing the noise of the forward process to a uniform distribution between $(-\sqrt{3}, \sqrt{3})$: $\epsilon \sim U(-\sqrt{3}, \sqrt{3})$ in Eq. (1) during training.

Quantization Schedule Setting

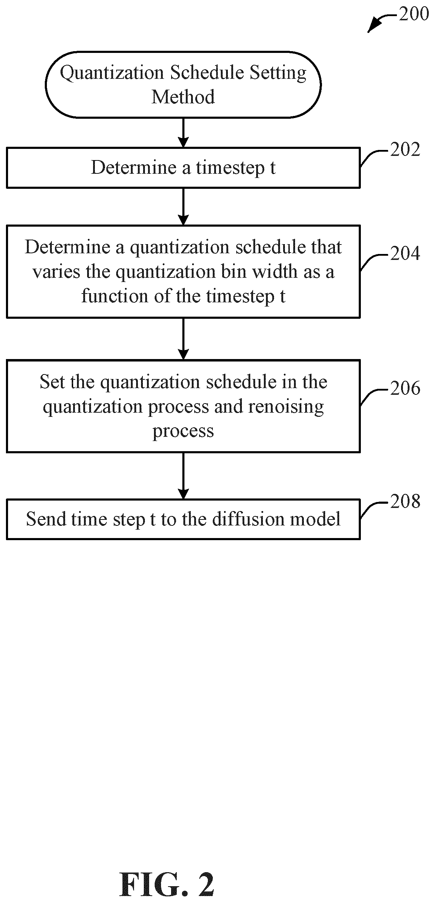

FIG. 2 depicts a simplified flowchart 200 of a method for determining a quantization schedule according to some embodiments. At 202, system 100 receives a time step t. The time step may be received from a user input, be automatically generated, or dynamically determined based on the input image. The value of the time step t is a rate-distortion tradeoff parameter, as the quantization bin width directly impacts the final size of the compressed bitstream. A rate distortion tradeoff may improve the balance between the compression rate and the distortion. The compression rate may be the number of bits that is used to encode the data and the distortion may be the difference between the reconstructed image and the original image. The input setting may tradeoff a high bitrate with low distortion or a low bitrate with high distortion. When quantization results in a higher compression rate, a higher bitrate is used, which may lead to more accurate reconstruction and less distortion. When fewer bits are used for quantization, a lower bitrate is used, which may lead to a less accurate reconstruction and more distortion. When the number of bits is reduced, a lower rate is achieved, but higher quantization error and greater distortion may result in the reconstructed image. However, the pipeline may compensate for the higher quantization error and greater distortion using diffusion model 116. The time steps t may be an optimal number of denoising steps that diffusion model 116 should perform, which produces realistic images. Quantization process 108 may add a certain amount of quantization error (e.g., noise). There may be a number of time steps to remove that certain amount of noise. When this number of time steps is performed by diffusion model 116, a realistic image results.

At 204, system 100 determines a quantization schedule that varies the quantization bin width as a function of the timestep t. As mentioned above, the bin width may be $\sqrt{12(1 - \alpha_t)^2}$.

At 206, system 100 sets the quantization schedule in quantization process 108 and renoising process 114. In some embodiments, server system 102 may send the quantization schedule via a network to receiver 104.

At 208, system 100 sends the time step t to receiver 104. Diffusion model 116 may use the time step t to perform a number of iterations of denoising steps on the reconstructed latent representation based on the value of the time step t. For example, if a value of 50 is received, diffusion model 116 may perform 50 iterations of denoising on the reconstructed latent representation.

Diffusion Model

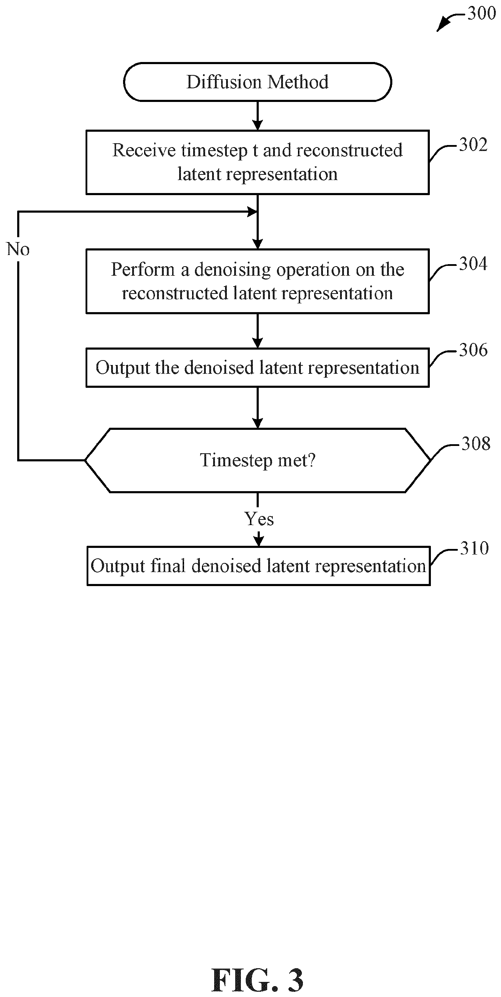

FIG. 3 depicts a simplified flowchart 300 of a method for performing a diffusion process according to some embodiments. At 302, diffusion model 116 receives the time step t and the reconstructed latent representation $\hat{y}_t$. The time step t may be specified by an input.

At 304, diffusion model 116 performs a denoising operation on the reconstructed latent representation $\hat{y}_t$. As discussed above, diffusion model 116 may receive the reconstructed latent representation $\hat{y}_t$ as input and the time step t. Then, diffusion model 116 may estimate the noise level of the reconstructed latent representation $\hat{y}_t$ and predict the previous step of the forward process to remove some noise from the reconstructed latent representation $\hat{y}_t$. At 306, diffusion model 116 outputs the denoised reconstructed latent representation $\hat{y}_{t-1}$.

At 308, it is determined whether the time step t is met. For example, if there are 50 time steps, diffusion model 116 may compare the time step of 50 to the current number of time steps. If the time step t is not met, the process reiterates to 304, where another denoising process is performed on the output of diffusion model 116. Here, the denoised reconstructed latent representation $\hat{y}_{t-1}$ is denoised again using the same process as described above. This process will continue until the time step t is met. When the time step t is met, at 310, diffusion model 116 outputs the final denoised reconstructed latent representation $\hat{y}_0$. Here, diffusion model 116 may have removed some of the noise that is introduced as quantization error by the quantization process.

Training

In some embodiments, diffusion model 116 may be used as a foundational model. The system may use stable diffusion as the foundation model, but other models may be used. The foundational models (e.g., diffusion models), which were trained, such as with a large amount of data and thus have excellent generative power to denoise latent representations of images. In some embodiments, system 100 fine tunes the pretrained Gaussian diffusion model to operate with uniform noise.

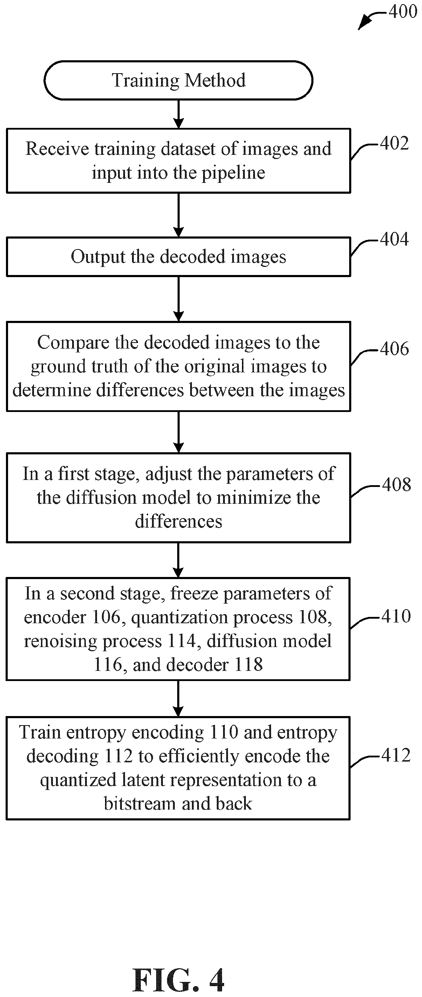

FIG. 4 depicts a simplified flowchart 400 of a method for performing the training process according to some embodiments. At 402, a training dataset of images may be input into the pipeline. The training dataset of images may be the ground truth. At 404, the pipeline outputs the decoded images. The pipeline may process the images as described above. At 406, the decoded images may be compared to the ground truth of the original images to determine differences between the decoded images and the original images. At 408, based on the differences, the parameters of denoising model 116 may be adjusted to minimize the difference, such as using a loss function. For example, the noise $\varepsilon$ is sampled from a uniform distribution of unit variance rather than a standard normal Gaussian (commonly used in diffusion models). Such a noise is applied to the source tensor (for instance, a latent or an image). Then, the denoising model is trained to predict the noise added to the source tensor given the noised one.

In a second stage, the process of 402-406 may be performed again. Then, at 410, in the second stage, parameters of encoder 106, quantization process 108, renoising process 114, diffusion model 116, and decoder 118 may be frozen. At 412, system 100 trains entropy encoding 110 and entropy decoding 112 to efficiently encode the quantized latent representation $\hat{z}$ to a bitstream and back. Notably, since all image transform modules are frozen, and the entropy coding stage is lossless, system 100 may optimize only on the rate objective. Additionally, system 100 samples the time step t during training - the function of the entropy model is an accurate probability model of the quantized data, and as the distribution of the reconstructed quantized latent representation $\hat{z}$ is dependent on input parameter t, system 100 varies it to reflect operation conditions at inference time. The range of t may be varied.

Conclusion

Accordingly, a lossy image compression codec based on latent diffusion models can be provided to produce realistic image reconstructions at low to very low bitrates. By combining the denoising capability of diffusion models with the inherent characteristics of quantization noise, the system produces perceptually pleasing reconstructions over a range of bitrates. Lower bitrates may be achieved by allowing quantization error in the quantization process to use less bits. The error may be corrected by removing noise using diffusion model 116. System 100 minimizes the noise level gap, the noise type gap, and the discretization gap. Further, diffusion models may be trained to denoise uniform noise.

System

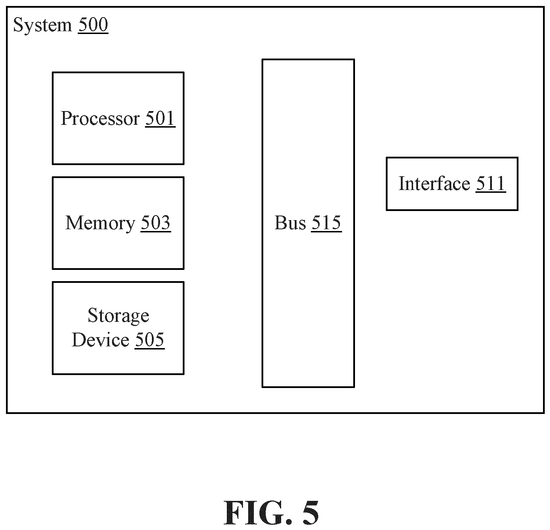

FIG. 5 illustrates one example of a computing device according to some embodiments. According to various embodiments, a system 500 suitable for implementing embodiments described herein includes a processor 501, a memory 503, a storage device 505, an interface 511, and a bus 515 (e.g., a PCI bus or other interconnection fabric.) System 500 may operate as a variety of devices, or any other device or service described herein. Although a particular configuration is described, a variety of alternative configurations are possible. The processor 501 may perform operations such as those described herein. Instructions for performing such operations may be embodied in the memory 503, on one or more non-transitory computer readable media, or on some other storage device. Various specially configured devices can also be used in place of or in addition to the processor 501. Memory 503 may be random access memory (RAM) or other dynamic storage devices. Storage device 505 may include a non-transitory computer-readable storage medium holding information, instructions, or some combination thereof, for example instructions that when executed by the processor 501, cause processor 501 to be configured or operable to perform one or more operations of a method as described herein. Bus 515 or other communication components may support communication of information within system 500. The interface 511 may be connected to bus 515 and be configured to send and receive data packets over a network. Examples of supported interfaces include, but are not limited to: Ethernet, fast Ethernet, Gigabit Ethernet, frame relay, cable, digital subscriber line (DSL), token ring, Asynchronous Transfer Mode (ATM), High-Speed Serial Interface (HSSI), and Fiber Distributed Data Interface (FDDI). These interfaces may include ports appropriate for communication with the appropriate media. They may also include an independent processor and/or volatile RAM. A computer system or computing device may include or communicate with a monitor, printer, or other suitable display for providing any of the results mentioned herein to a user.

Any of the disclosed implementations may be embodied in various types of hardware, software, firmware, computer readable media, and combinations thereof. For example, some techniques disclosed herein may be implemented, at least in part, by non-transitory computer-readable media that include program instructions, state information, etc., for configuring a computing system to perform various services and operations described herein. Examples of program instructions include both machine code, such as produced by a compiler, and higher-level code that may be executed via an interpreter. Instructions may be embodied in any suitable language such as, for example, Java, Python, C++, C, HTML, any other markup language, JavaScript, ActiveX, VBScript, or Perl. Examples of non-transitory computer-readable media include, but are not limited to: magnetic media such as hard disks and magnetic tape; optical media such as flash memory, compact disk (CD) or digital versatile disk (DVD); magneto-optical media; and other hardware devices such as read-only memory ("ROM") devices and random-access memory ("RAM") devices. A non-transitory computer-readable medium may be any combination of such storage devices.

In the foregoing specification, various techniques and mechanisms may have been described in singular form for clarity. However, it should be noted that some embodiments include multiple iterations of a technique or multiple instantiations of a mechanism unless otherwise noted. For example, a system uses a processor in a variety of contexts but can use multiple processors while remaining within the scope of the present disclosure unless otherwise noted. Similarly, various techniques and mechanisms may have been described as including a connection between two entities. However, a connection does not necessarily mean a direct, unimpeded connection, as a variety of other entities (e.g., bridges, controllers, gateways, etc.) may reside between the two entities.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" include plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

**Claims**

1. A method comprising:

    receiving an image;
    encoding the image into a latent representation in a latent space;
    performing a quantization process on the latent representation to generate a quantized latent representation; and
    transmitting the quantized latent representation to a receiver, wherein a renoising process is performed to add uniform noise to generate a reconstructed latent representation and a diffusion model performs a denoising process for a number of iterations based on a time step t to remove noise from the reconstructed latent representation to generate a denoised reconstructed latent representation, and wherein the diffusion model is trained to perform denoising using the uniform noise.

2. The method of claim 1, further comprising:
    performing entropy coding on the quantized latent representation, wherein the receiver entropy decodes the quantized latent representation that was entropy coded.

3. The method of claim 1 or 2, wherein performing quantization on the latent representation comprises:
    selecting a quantization schedule that varies a quantization bin width as a function of the time step t used by the diffusion model to denoise the reconstructed latent representation.

4. The method of claim 3, wherein performing quantization on the latent representation comprises:
    selecting a bin width to match a signal-to-noise ratio at time steps in time step t used by the diffusion model to denoise the reconstructed latent representation.

**5.** The method of claim 4, wherein:

the bin width is equal to $\sqrt{12(1 - \alpha_t)^2}$, wherein $\alpha_t$ is a variance schedule that defines a signal-to-noise ratio at time steps in time step t for the denoising process.

**6.** The method of any one of claims 3 to 5, further comprising:

receiving the time step t; and
using the time step t to determine the quantization schedule.

**7.** The method of any one of the preceding claims, wherein performing quantization on the latent representation comprises: dithering the latent representation with a uniformly distributed random variable;
wherein the denoising process may be performed using a variance schedule that defines a signal-to-noise ratio at time steps in time step t and increases as timesteps go to zero.

**8.** The method of any one of the preceding claims, wherein the renoising process is performed on the latent representation and uniform noise is added to the quantized latent representation in the renoising process;
wherein the reconstructed latent representation after the renoising process may be a continuous variable.

**9.** The method of any one of the preceding claims, wherein:

the diffusion model is trained to denoise a first type of noise, and
the diffusion model is adjusted to denoise the uniform noise;
wherein the diffusion model optionally reconstructs information lost in the quantization of the latent representation.

**10.** The method of any one of the preceding claims, wherein:

a quantization error from generating the quantized latent representation adds the quantization noise to the reconstructed latent representation, and
the diffusion model denoises the reconstructed latent representation to remove the quantization noise from the reconstructed latent representation.

**11.** A transitory or non-transitory computer-readable storage medium having stored thereon computer executable instructions, which when executed by a computing device, cause the computing device to be operable for:

receiving an image;
encoding the image into a latent representation in a latent space;
performing a quantization process on the latent representation to generate a quantized latent representation; and
transmitting the quantized latent representation to a receiver, wherein a renoising process is performed to add uniform noise to generate a reconstructed latent representation and a diffusion model performs a denoising process for a number of iterations based on a time step t to remove noise from the reconstructed latent representation to generate a denoised reconstructed latent representation, and wherein the diffusion model is trained to perform denoising using the uniform noise.

**12.** A method comprising:

receiving a quantized latent representation of an image in a latent space, wherein the image is encoded into a latent representation in the latent space and quantized to generate the quantized latent representation;
performing a renoising process to add uniform noise to generate a reconstructed latent representation;
performing, using a diffusion model, a denoising process for a number of time steps based on a time step t to remove noise from the reconstructed latent representation to generate a denoised reconstructed latent representation, wherein the diffusion model is trained to perform denoising using the uniform noise; and
decoding the denoised reconstructed latent representation into a reconstructed image.

**13.** The method of claim 12, wherein:

the quantized latent representation is entropy coded, and

the quantized latent representation is entropy decoded before performing the renoising process;
wherein the quantized latent representation may be generated by:
selecting a quantization schedule that varies a bin width as a function of time steps in the time step t used by the diffusion model to denoise the quantized latent representation.

14. The method of claim 12 or 13, wherein the denoising process is performed using a variance schedule that defines a signal-to-noise ratio at time steps in time step t and increases as timesteps go to zero;
wherein:
a bin width may be selected to match a signal-to-noise ratio at time steps in the time step t used by the diffusion model to denoise the quantized latent representation.

15. The method of any one of claims 12 to 14, wherein:

the diffusion model is trained to denoise a first type of noise, and
the diffusion model is adjusted to denoise the uniform noise.

**FIG. 1**

EP 4 718 371 A1

200

```
┌─────────────────────────────┐
│  Quantization Schedule Setting │
│          Method               │
└─────────────────────────────┘
              │
              ▼
┌─────────────────────────────┐
│     Determine a timestep t    │  ─202
└─────────────────────────────┘
              │
              ▼
┌─────────────────────────────┐
│ Determine a quantization schedule that │
│  varies the quantization bin width as a │  ─204
│     function of the timestep t          │
└─────────────────────────────┘
              │
              ▼
┌─────────────────────────────┐
│   Set the quantization schedule in the │
│   quantization process and renoising   │  ─206
│              process                   │
└─────────────────────────────┘
              │
              ▼
┌─────────────────────────────┐
│ Send time step t to the diffusion model │  ─208
└─────────────────────────────┘
```

# FIG. 2

— 300

```
        ╭──────────────────────╮
        │    Diffusion Method   │
        ╰──────────────────────╯
                    │
                    ▼
    ┌──────────────────────────────────┐  — 302
    │  Receive timestep t and reconstructed │
    │        latent representation          │
    └──────────────────────────────────┘
                    │
No                  ▼
    ┌──────────────────────────────────┐  — 304
    │  Perform a denoising operation on the │
    │    reconstructed latent representation │
    └──────────────────────────────────┘
                    │
                    ▼
    ┌──────────────────────────────────┐  — 306
    │  Output the denoised latent representation │
    └──────────────────────────────────┘
                    │
                    ▼
    ⬡────────────────────────────────⬡  — 308
    │          Timestep met?            │
    ⬡────────────────────────────────⬡
                    │
                   Yes
                    ▼
    ┌──────────────────────────────────┐  — 310
    │ Output final denoised latent representation │
    └──────────────────────────────────┘
```

# FIG. 3

400

Training Method

Receive training dataset of images and input into the pipeline 402

Output the decoded images 404

Compare the decoded images to the ground truth of the original images to determine differences between the images 406

In a first stage, adjust the parameters of the diffusion model to minimize the differences 408

In a second stage, freeze parameters of encoder 106, quantization process 108, renoising process 114, diffusion model 116, and decoder 118 410

Train entropy encoding 110 and entropy decoding 112 to efficiently encode the quantized latent representation to a bitstream and back 412

FIG. 4

System 500

Processor 501

Memory 503

Storage Device 505

Bus 515

Interface 511

# FIG. 5

Europäisches
Patentamt

European
Patent Office

Office européen
des brevets

## EUROPEAN SEARCH REPORT

**Application Number**

EP 25 18 6760

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LUCAS RELIC ET AL: "Lossy Image Compression with Foundation Diffusion Models", ARXIV.ORG, CORNELL UNIVERSITY LIBRARY, 201 OLIN LIBRARY CORNELL UNIVERSITY ITHACA, NY 14853, 12 April 2024 (2024-04-12), XP091726817, * Sec.3, Sec. 4, Eq.2; pages 4,6,7,9 * | 1-15 | INV. G06T5/60 G06T5/70 |
| Y | ERIC HEITZ ET AL: "Iterative alpha-(de)Blending: a Minimalist Deterministic Diffusion Model", ARXIV.ORG, CORNELL UNIVERSITY LIBRARY, 201 OLIN LIBRARY CORNELL UNIVERSITY ITHACA, NY 14853, 5 May 2023 (2023-05-05), XP091502621, DOI: 10.1145/3588432.3591540 * Pag.6 sec.7; page 6 * | 1-15 | |
| A | YIBO YANG ET AL: "An Introduction to Neural Data Compression", ARXIV.ORG, CORNELL UNIVERSITY LIBRARY, 201 OLIN LIBRARY CORNELL UNIVERSITY ITHACA, NY 14853, 16 August 2023 (2023-08-16), XP091584739, * Sec. 3.3; pages 152-153, * | 7,8,10 | **TECHNICAL FIELDS SEARCHED (IPC)** G06T H04N |

-/--

The present search report has been drawn up for all claims

| Place of search | Date of completion of the search | Examiner |
|---|---|---|
| Munich | 26 August 2025 | Capone, Luigino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BALLE JOHANNES ET AL: "End-to-end optimization of nonlinear transform codes for perceptual quality", 2016 PICTURE CODING SYMPOSIUM (PCS), IEEE, 4 December 2016 (2016-12-04), pages 1-5, XP033086823, DOI: 10.1109/PCS.2016.7906310 [retrieved on 2017-04-19] * page 4 * | 1-15 | |
| A | LI HENRI: "Non-Normal Diffusion Models", ICML 2023 WORKSHOP ON STRUCTURED PROBABILISTIC INFERENCE & GENERATIVE MODELING - HAWAII, UNITED STATES, vol. 1, 20 June 2023 (2023-06-20), pages 1-20, XP093303779, US Retrieved from the Internet: URL:https://openreview.net/pdf?id=6N8L9D5M 9L> * the whole document * | 1-15 | |

TECHNICAL FIELDS
SEARCHED (IPC)

The present search report has been drawn up for all claims

| Place of search | Date of completion of the search | Examiner |
|---|---|---|
| Munich | 26 August 2025 | Capone, Luigino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

              

& : member of the same patent family, corresponding document

EPO FORM 1503 03.82 (P04C01)

**EP 4 718 371 A1**

**Patent documents cited in the description**

- US 63700489